(19) **Europäisches Patentamt**

**European Patent Office**

**Office européen des brevets**

(11) **EP 1 031 464 A2**

(12) **EUROPÄISCHE PATENTANMELDUNG**

(43) Veröffentlichungstag:
30.08.2000 Patentblatt 2000/35

(51) Int. Cl.⁷: **B60Q 3/02**, F21V 5/04, F21V 8/00

(21) Anmeldenummer: 00103113.7

(22) Anmeldetag: 16.02.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.02.1999 DE 19908040**

(71) Anmelder:
**Diehl Luftfahrt Elektronik GmbH**
**90552 Röthenbach (DE)**

(72) Erfinder:
• **Beyerlein, Wolfgang**
**91734 Mitteleschenbach (DE)**
• **Krummer, Thomas**
**91781 Weissenburg (DE)**

(74) Vertreter:
**Hofmann, Gerhard, Dipl.-Ing.**
**Patentassessor**
**Stephanstrasse 49**
**90478 Nürnberg (DE)**

(54) **Einrichtung zur Beleuchtung von Räumen, Körpern oder Flächen**

(57) Es wird eine Einrichtung zur Beleuchtung aus Ausleuchtung von Räumen, Körpern oder Flächen vorgeschlagen, die aus einer Vielzahl von Leuchtdioden (1) gebildet ist. Diese Leuchtdioden (1) sind von einem Hüllkörper (14) radial umhüllt, an den sich stirnseitig ein röhrenförmiges Element (15) anschließt, das auf einer Linse (4) anliegt. Dadurch ist zwischen der Leuchtdiode (1) und der Linse (4) ein eingestellter Abstand eingerichtet. Alle aus der Leuchtdiode (1) austretenden Lichtflecke werden aufgrund der Überlagerung im Abstand vor der Linse (4) zu einem einzigen Lichtfleck von großer Helligkeit abgebildet.

**Fig. 2**

EP 1 031 464 A2

**Beschreibung**

Die Erfindung betrifft eine Einrichtung zur Be- oder Ausleuchtung von Räumen, Körpern oder Flächen nach dem Oberbegriff vom Patentanspruch 1.

In der älteren und bisher nicht veröffentlichten deutschen Patentanmeldung DE 198 43 330.1 der Anmelderin ist eine Flugzeugkabinen-Beleuchtung beschrieben, die aus mehreren punktförmigen Lichtquellen besteht. Diese punktförmigen Lichtquellen weisen mindestens eine Leuchtdiode auf und sind an mindestens einer Stromversorgungseinheit angeschlossen. Durch die Anordnung mehrerer punktförmiger Lichtquellen an oder in der Decke der Kabine eines Luftfahrzeuges wird eine gleichmäßige Ausleuchtung der Kabine erreicht. Der Einsatz von Leuchtdioden in den punktförmigen Lichtquellen macht eine aufwendige elektrische Ansteuerung der Kabinenbeleuchtung überflüssig. Ferner ist gegenüber der Verwendung von üblichen Glühbirnen der Stromverbrauch erheblich geringer. Und schließlich ist die Lebensdauer von Leuchtdioden bekanntlich um ein vielfaches höher als die Lebensdauer von Leuchtstoffröhren oder Glühbirnen, so daß ein aufwendiges Auswechseln von defekten Leuchten nicht mehr nötig ist. In dieser älteren Patentanmeldung wurde auch bereits beschrieben, daß je nach der Dichte der an der Decke der Flugzeugkabine angeordneten punktförmigen Lichtquellen die Beleuchtung als Leselampe über einzelnen Sitzplätzen Verwendung finden kann. Für die Leuchtdioden sind vorzugsweise weiße Leuchtdioden vorgesehen, bei denen es sich aus zwei- oder mehrfarbigen Leuchtdioden gebildete Einheiten oder aus sogenannten Lumineszenskonversions-Dioden handeln kann.

Der Einsatz von Leuchtdioden findet auch in der Verkehrstechnik vielfache Anwendung. So geht beispielsweise aus der DE 195 14 424 A1 hervor, zu zwei unterschiedlichen Lichtquellen kompatible Linsen für die Leuchte eines Fahrzeuges einzusetzen. Dabei handelt es sich um eine Kraftfahrzeugbegrenzungsleuchte mit einer Linse, die sowohl für die Ausleuchtung mit Leuchtdioden als auch mit Glühbirnen geschaffen wurde. Die Linse wurde deshalb so ausgebildet, daß sie einen Satz von Stufen für jede der unterschiedlichen Lichtquellen aufweist, um eine angestrebte Streuung der Lichtquelle zu bewirken. Insgesamt ist zu dieser Offenlegungsschrift festzuhalten, daß sie lediglich eine Begrenzungsleuchte darstellt, d. h., daß nur so viel Licht abgegeben wird, um eine Begrenzung eines Fahrzeugs durch die Rückleuchten zu erkennen. Eine Be- oder Ausleuchtung einer Fläche oder eines Körpers wird mit dieser offenbarten Leuchte nicht angestrebt, weshalb diese Leuchte dem Gebiet der passiven Leuchten zugeordnet werden kann.

Die WO 97/26483 offenbart eine Leuchtdiodenlampen-Vorrichtung für den Einsatz in Signallampen bzw. Verkehrsampeln. Auch in dieser Veröffentlichung geht es im Prinzip darum, ein ausreichendes Licht in verschiedenen Farben zur Verfügung zu stellen, um deutlich erkannt zu werden. Zu diesem Zweck sind mehrere Reihen von Leuchtdioden angeordnet worden, die durch eine Linse mit entsprechenden Stufen abgedeckt werden. Durch diese Abstufungen in der Linse wird erreicht, daß das Licht unter bestimmten Winkeln zur Strahlenachse ausgesendet wird, um dadurch aus verschiedenen Winkeln und allen Witterungseinflüssen gut sichtbar zu sein.

Die EP 0 523 927 B1 beschreibt eine Leuchtstofflampe mit Linse. Dabei ist dieser Veröffentlichung als wesentlich zu entnehmen, daß ein Linsenelement für eine Leuchtdiode mindestens zwei Fassetten, d. h. Linsenkörper aufweist. Durch die Fassetten wird durch Brechung ein gewünschter Ausgangsstrahl geformt.

Ausgehend von dem vorgenannten Stand der Technik ist es Aufgabe der Erfindung, eine Einrichtung zur Be- oder Ausleuchtung von Räumen, Körpern oder Flächen zu schaffen, durch welche in einem einstellbaren Abstand von der Lichtquelle eine relativ schaff gegen die Umgebung abgegrenzte, hell erleuchtete Fläche erzielt wird, die als aktives Licht bezeichnet wird.

Erfindungsgemäß ist diese Aufgabe durch die Merkmale des Patentanspruchs 1 gelöst. Vorteilhafte Ausgestaltungen und Weiterbildungen der Erfindung sind in den Unteransprüchen beschrieben.

Mit dieser erfinderischen Lösung wird eine Leseleuchte auf der Basis von Leuchtdioden (LEDs) für die Verwendung insbesondere in der Luftfahrt geschaffen Eine solche neue Leseleuchte zeichnet sich durch eine hohe Ausfallsicherheit aus. Es wird ein maximales Licht aus den Leuchtdioden nach vorne zur auszuleuchtenden Fläche erzielt. Wegen der hohen Zuverlässigkeit der Leuchtdioden entfällt der bei üblichen Leuchtmitteln häufige Wechsel. Ferner bietet die Lösung für Leseleuchten Gestaltungsfreiräume und variable konstruktive Auslegungen. Weitere Vorteile sind:

- Es wird eine relativ scharfkantige Abbildung des Lichtkreises erzielt.
- Der Lichtausgang ist proportional zu der Menge der Leuchtdioden.
- In Versuchen mit anschließenden Messungen hat sich herausgestellt, daß eine Menge von 60 Leuchtdioden für eine Leseleuchte optimale Ergebnisse bringt, jedoch sind auch geringere Mengen und größere Mengen mit Erfolg einsetzbar
- Es sind schmale Leuchten möglich, die dennoch einen ausreichend großen Lichtfleck erzeugen.

In der Zeichnung sind Beispiele der Erfindung dargestellt. Es zeigen:

Figur 1    eine schematische Darstellung des theoretischen Modells für den optischen Strahlengang einer Leseleuchte,

Figur 1a     eine Frontansicht der Linse im Detail,

Figur 2     ein Leuchtenelement im Längsschnitt,

Figur 3     eine Draufsicht auf eine Leseleuchte mit Leuchtelementen,

Figur 4     die Leseleuchte nach Figur 3 gemäß der Linie IV-IV im Schnitt,

Figur 5     die Vorderansicht einer Leseleuchte mit anderer Anordnung von Leuchtelementen,

Figur 6     eine weitere Vorderansicht einer Leseleuchte mit anders angeordneten Leuchtelementen,

Figur 7     eine wiederum weitere Vorderansicht einer Leseleuchte mit anders angeordneten Leuchtelementen,

Figur 8     eine Leseleuchte im Schnitt mit angekoppelten Lichtleitern,

Figur 9     ein einzelnes Leuchtelement mit angekoppeltem Lichtleiter im Schnitt.

In dem theoretischen Modell zur Darstellung des optischen Strahlenganges für eine Leseleuchte ist die Lichtquelle mit 1 bezeichnet, die gemäß der Erfindung eine Leuchtdiode ist. Die Leuchtdiode 1 besitzt eine vordere, im wesentlichen kugelförmige Lichtaustrittsfläche 2. In vorteilhafter Anwendung der Erfindung werden bevorzugt eng fokussierende Leuchtdioden 1 (LED) eingesetzt. In einem wählbaren und einstellbaren Abstand zur Objektebene 7 der Leuchtdiode 1 befindet sich in einer Hauptebene 3 eine Linse 4. In einem weiteren einstellbaren Abstand vor dieser Linse 4 mit der Hauptebene 3 ist die Bildebene 5 dargestellt, die ebenso wie die Hauptebene 3 senkrecht zum optischen Strahlengang 6 angeordnet ist. Der Abstand zwischen der Objektebene 7 der Leuchtdiode 1 und der Hauptebene 3 der Linse 4 ist mit $S_0$ bezeichnet, während der Abstand zwischen der Hauptebene 3 der Linse 4 und der Bildebene 5 das Bezugzeichen $S_1$ trägt. Die Abstände $S_0$ zu $S_1$ verhalten sich im Beispielsfall etwa wie 100 : 1. Das Verhältnis ist abhängig von der auszuleuchtenden Fläche in der Bildebene 5.

Der optische Strahlengang 6 verläuft ausgehend von der Lichtquelle 1 durch die Linse 4 bis auf die Bildebene 5 in einer durchgehenden, hier waagerecht gezeichneten Ebene. Die am Außenumfang der Leuchtdiode 1 austretenden Lichtstrahlen 8 verlaufen bis zum Eintritt in die Hauptebene 3 der Linse 4 parallel zum optischen Strahlengang 6. Die Lichtstrahlen 8 werden in der Linse 4 entsprechend den optischen Gesetzen umgelenkt und treffen in einem gleichmäßigen radialen Abstand von dem optischen Strahlengang 6 auf die Bildebene 5 auf und markieren auf der Bildebene 5 dadurch in einem entsprechend vergrößertem Maßstab die Lichtquelle ab. Dies bedeutet, daß auf der Bildebene 5 der optische Strahlengang im Punkt 9 auftrifft, und die beiden abgelenkten Strahlen 8 markieren auf der Bildebene 5 jeweils die äußeren Punkte 10, deren Abstand zueinander den Durchmesser der abgebildeten Lichtquelle auf der Bildebene 5 darstellt. Der parallel zum optischen Strahlengang 6 verlaufende Lichtstrahl 8 tritt am Punkt 11 aus der Objektebene der Strahlengang 6 verlaufende Lichtstrahl 8 tritt am Punkt 11 aus der Objektebene der Leuchtdiode 1 aus. Vom gleichen Punkt 11 auf der Objektebene wird der optische Strahl 12 abgenommen, der durch die Mitte der Linse 4 verläuft und auf der Bildebene 5 wiederum exakt im Punkt 10 endet. Der dritte Lichtstrahl 13 vom Ausgangspunkt 11 trifft im unteren Randbereich der Linse 4 ein und wird dergestalt abgelenkt, daß er ebenfalls im Punkt 10 der Bildebene auftrifft. Die Lichtstrahlen 8, 12, 13 mit dem Ausgangspunkt 11 und dem Auftreffpunkt 10 unterliegen der Bedingung, daß

$$f = \frac{S_0 \times S_1}{S_0 + S_1}$$

ist, wobei f die Brennweite der Linse 4 bedeutet.

Auf der Bildebene wird die Lichtquelle, nämlich die Leuchtdiode 1, abgebildet. Entsprechend den im Beispielsfall vorgegebenen Verhältnissen des Abstandes $S_1$ zum Abstand $S_0$ beträgt der Abbildungsmaßstab der Lichtquelle auf der LED-Linse etwa 10 : 1, während der Abbildungsmaßstab für die Lichtquelle in der Bildebene 5 etwa 10 : 1 ist.

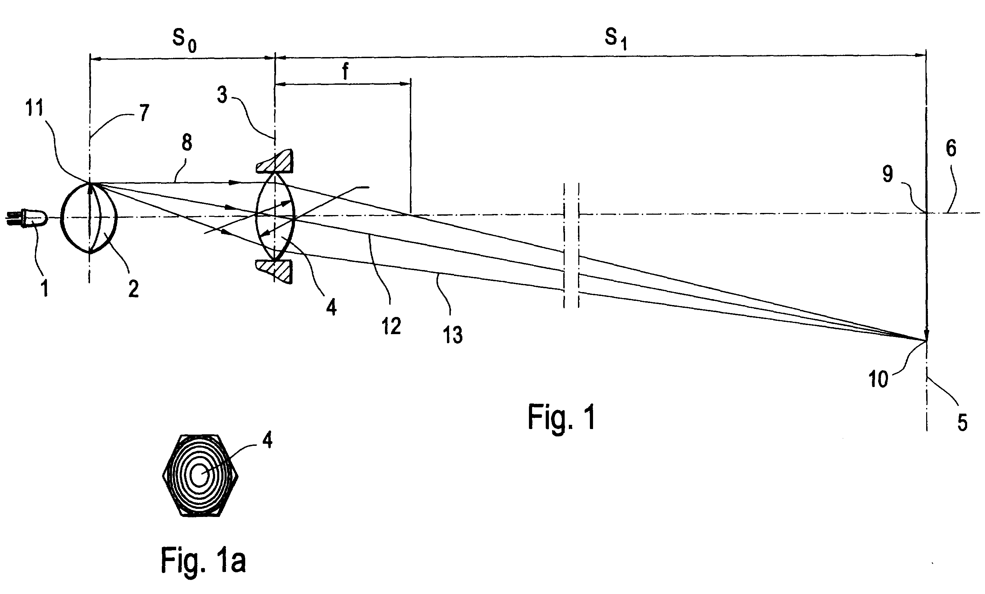

Entsprechend dem Detail in Figur 1a ist die Linse 4 vorzugsweise in eine Fassung von hexagonalem Querschnitt eingesetzt.

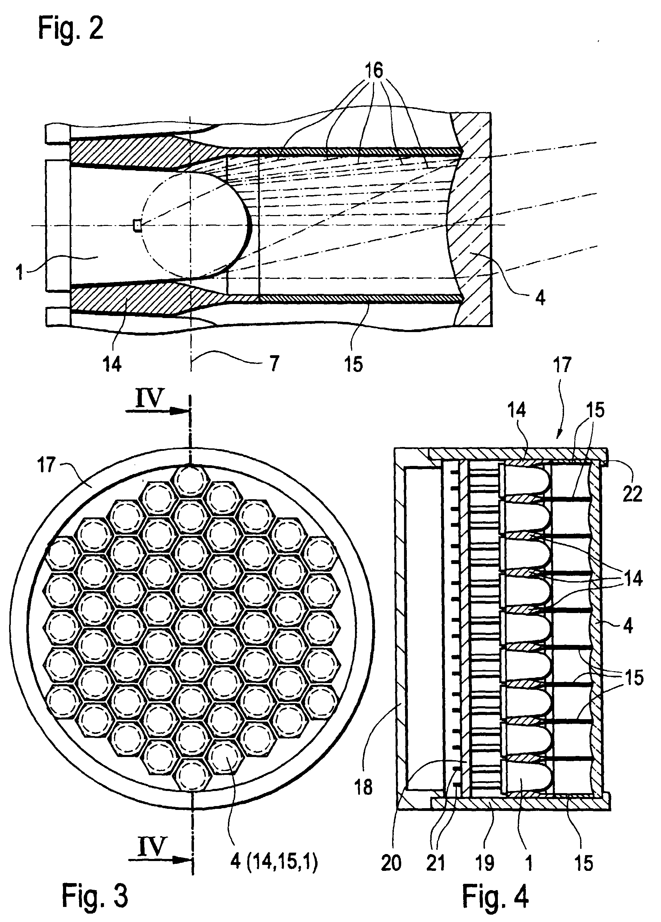

In Figur 2 ist ein Detail eines Leuchtenelementes in vergrößertem Maßstab dargestellt. Die Leuchtdiode 1 als Lichtquelle ist bodenseitig in eine entsprechende Fassung mit elektrischem Anschluß eingesetzt. Im Abstand $S_0$ von der Objektebene 7 befindet sich wieder die Linse 4, die in diesem Beispiel als ein über mehrere Leuchtdioden verlaufender Linsenkörper ausgebildet ist. Der optische Strahlengang 6 verläuft entsprechend der Figur 1 in waagerechter Linie durch die Leuchtdiode 1 und Linse 4. Um die Leuchtdiode ist ein Hüllkörper 14 angeordnet, der die Leuchtdiode 1 im unteren Bereich relativ eng umschließt und etwa im Bereich der Objektebene 7 in leichter konischer Öffnung geformt ist. Der Hüllkörper 14 endet in geringem Abstand axial vor der Leuchtdiode 1. Auf den Hüllkörper 14 ist ein röhrenförmiges Element 15 stirnseitig bündig aufgesetzt, das mit seiner vorderen Stirnseite auf dem Linsenkörper 4 aufsteht. Der Hüllkörper 14 und das röhrenförmige Element 15 können auch als einstückiges Hüllelement ausgebildet sein. Wie aus Figur 2 ersichtlich ist, verlaufen die von der Leuchtdiode 1 ausgehenden Lichtstrahlen 16 im unteren Bereich der Leuchtdiode nahezu radial und treffen auf die Innenfläche des Hüllkörpers 14. Da die Oberfläche des Hüllkörpers und auch des röhrenförmigen Elementes in nicht-reflektierender Weise ausgebildet sind, werden diese Lichtstrahlen 16 auf der Innenfläche des Hüllkörpers geschluckt. Im oberen kugelförmigen Abschnitt der Leuchtdiode treten die Lichtstrahlen 16 und einem ständig geringer werdenden Winkel aus und treffen dort auf die Innenflächen des Hüllkörpers 14 und des röhrenförmigen Elementes 15, ohne reflektiert zu werden. Nur die in einem begrenzten kugelförmigen Frontbereich der Leuchtdiode 1 austretenden Lichtstrahlen 16 treffen ungehindert auf die im Abstand angeordnete Linse 4 und werden von dort auf die Bildebene 5 abgestrahlt. Dieser Aufbau des Leuchtenelementes zeigt deutlich, daß das Streulicht der Leuchtdiode 1 geschluckt wird, während entsprechend der Blendenwirkung nur aktives Licht zur Linse durchgegeben wird.

Aus der Vorderansicht der Leseleuchte 17 nach Figur 3 ist zu erkennen, daß die Linsen 4 und auch die Hüllkörper 14 mit den röhrenförmigen Elementen 15 im Querschnitt sechseckförmige ausgebildet sind. Dieser hexagonale Querschnitt erlaubt eine unmittelbare enge Anordnung der Linsen 4 bzw. der Hüllkörper 14. Auf diese Weise kann in einem relativ kleinen Gesamtquerschnitt der Leseleuchte 17 eine Vielzahl von Leuchtdioden 1 mit Linsen 4 untergebracht werden. Dadurch wird die angestrebte Mindestzahl von Leuchtdioden 1 von etwa 60 Stück Leuchtdioden eingebaut werden. Natürlich sind statt der hexagonalen Querschnitte der einzelnen Linsen 4 bzw. der Hüllkorper 14 und der röhrenförmigen Elemente 15 auch andere Querschnitte möglich, beispielsweise quadratische, runde oder dreieckförmige Querschnitte. Dabei muß jedoch in Kauf genommen werden, daß die Anzahl der unterzubringenden Leuchtdioden 1 geringer wird und daß zwischen den einzelnen Leuchtdioden 1 mit Linsen 4 nicht ausfüllbare Hohlräume verbleiben.

Die Leseleuchte 17 ist gemäß der Schnittdarstellung in Figur 4 mit einer bodenseitigen Abdeckung 18 versehen. An die bodenseitige Abdeckung 18 schließt sich in axialer Richtung ein röhrenförmiger Mantel 19 an, in den die scheibenförmige Aufnahme 20 für die Leuchtdioden 1 eingesetzt ist. Die Leuchtdioden 1 sind mit ihren Anschlußbeinchen 21 in die Aufnahme 20 mechanisch fest und elektrisch verbunden eingesetzt. Entsprechend der Detaildarstellung nach Figur 2 befinden sich um die Leuchtdioden 1 die Hüllkörper 14 mit den frontseitig angesetzten röhrenförmigen Elementen Die röhrenförmige Elemente 15 schließen an den einstückig ausgebildeten Linsenkörper 4 stirnseitig an, der von einem ringförmigen Kragen des Mantels 19 eingefaßt ist. Die im wesentlichen wabenförmige Ausbildung und An ordnung der Hüllkörper 14 mit den röhrenförmigen Elementen 15 dient gleichzeitig auch zur Zentrierung der Leuchtdioden 1, wobei die Hauptaufgabe dieser Hüllkörper 14 und röhrenförmige Elemente 15 jedoch darin besteht, die Lichtstrahlen jeder einzelnen Leuchtdiode konzentriert auf die Linsen 4 zu senden. In dem Aufbau der Leseleuchte 17 nach Figur 4 sind die Hüllkörper 14 insgesamt als mechanische Zentrierung für die Leuchtdioden 1 und die röhrenförmigen Körper als Blende und als Distanzscheibe für die hexagonalen Linsenkörper 4 zu sehen.

Die Linsen 4 liegen normalerweise parallel nebeneinander. Sie können ebenso gut jedoch auch gedreht oder gekippt werden, wodurch ein Ablenken der Lichtstrahlen erzielt wird bis hin zu Lichtstrahlen, die auf einen einzigen Mittelpunkt ausgerichtet sind. Aufgrund der in Figur 1 erläuterten Verhältnisse überlagern sich die aus der Vielzahl von Leuchtdioden 1 der Leseleuchte 17 austretenden Lichtstrahlen zu einem einzigen, im wesentlichen runden Lichtfleck. Mit anderen Worten, alle in der Vorderansicht der Leseleuchte 17 zu erkennenden Kreise der Leuchtdioden 1 mit Linse 4 überlagern sich in der Bildebene 5 zu einem einzigen gemeinsamen Lichtfleck. Diese Wirkungsweise wird dadurch erzielt, daß entsprechende Abstandsverhältnisse von der Leuchtdiode 1 zur Linse 4 und zur Bildebene 5 bei einer Brennweite nach der oben bereits erwähnten Formel von

$$f = \frac{S_0 \times S_1}{S_0 + S_1}$$

eingehalten werden. Dies bedeutet, daß die in der Vorderansicht nach Figur 3 im Zentrum angeordnete Leuchtdiode mit nur geringen Seitenunterschieden den gleichen Lichtfleck bildet wie die in der Vorderansicht der Leseleuchte 17 am Außenrand vorgesehene Leuchtdiode 1. Dadurch wird in der Bildebene 5 ein Lichtkreis von bestimmtem Durchmesser mit sehr großer Helligkeit erzielt. Nur dieses aktive Licht der Leuchtdioden erlaubt schließlich auch das Lesen von Druckschriften, die etwa in der Bildebene 5 gehalten sind.

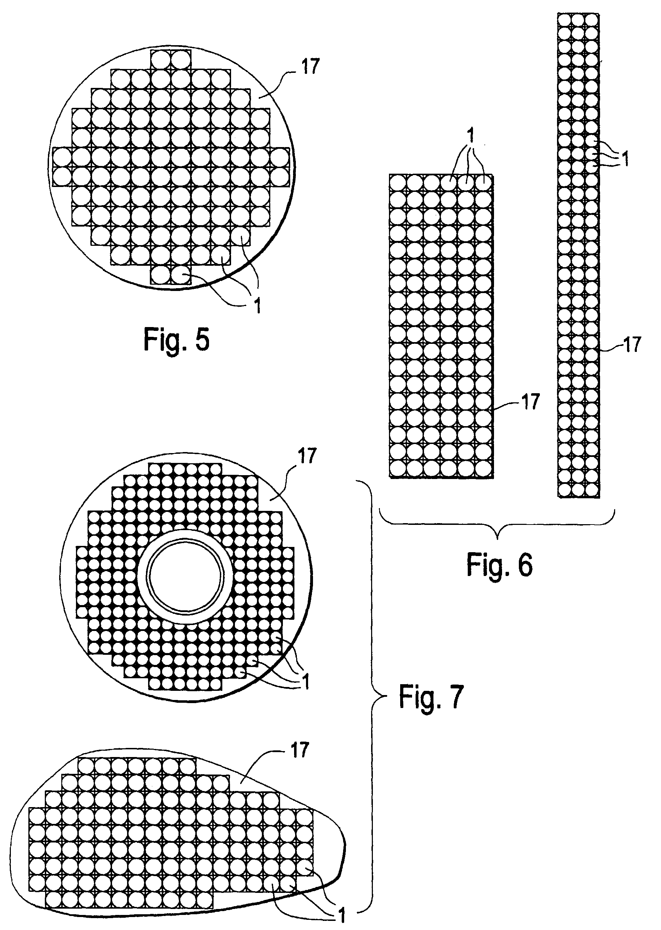

In den Figuren 5, 6 und 7 sind mögliche Anordnungen der Lichtquellen bzw. Leuchtdioden 1 in der Draufsicht dargestellt. Die Figur 5 weicht in der Draufsicht von Figur 3 dadurch ab, daß in Figur 5 quadratisch Linsenkörper bzw. Hüllkörper 14 dargestellt sind. Aus dem Vergleich der Figuren 5 und 3 ist erkennbar, daß die hexagonale Querschnittsform der Linsenkörper 4 mit Hüllkörpern 14 eine kompaktere Anordnung zuläßt.

In Figur 6 sind zwei Frontansichten von Leseleuchten dargestellt, die beide rechteckförmig sind, jedoch unterschiedliche Längen- und Breitenverhältnisse aufweisen. Trotz dieser im Rechteck aneinander gefügten Lichtquellen 1 erscheint auf der Bildebene 5 ein im wesentlichen gleicher, runder Lichtfleck, weil alle einzelnen Lichtflecke aus den Leuchtdioden aufgrund der in Figur 1 geschilderten Verhältnisse sich zu einem einzigen Lichtfleck auf der Bildebene 5 überlagern.

Auch in den beiden in Figur 7 dargestellten Beispielen werden mit den in der Frontansicht kreisringförmigen bzw. nierenförmigen Leseleuchten auf der Bildebene 5 runde Lichtpunkte bzw. Lichtflecke erzielt.

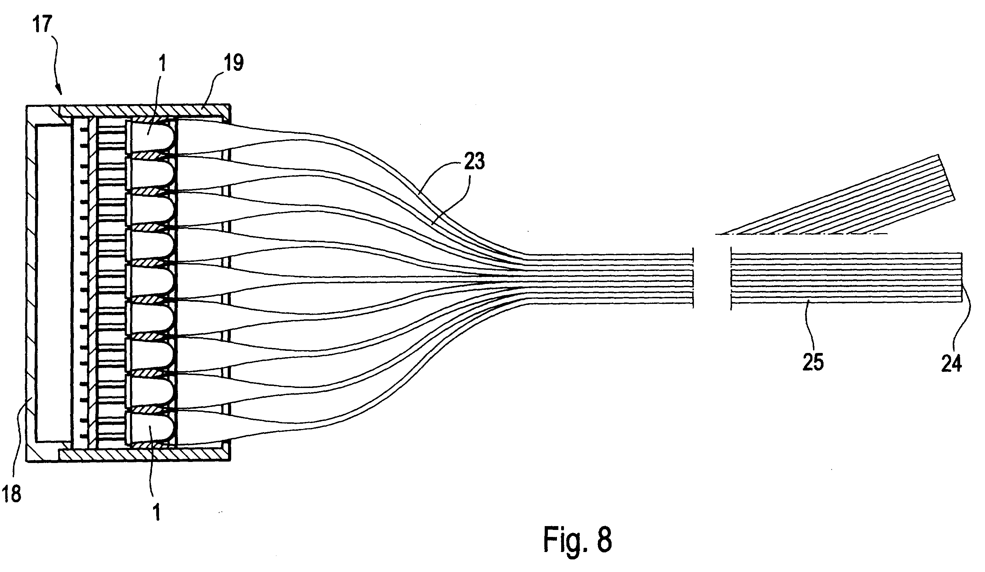

Nach den Figuren 1 bis 7 wurde das aus den Leuchtdioden 1 austretende Licht über Linsenkörper 4 frei auf eine Bildebene 5 abgebildet. Nach Figur 8 ist es aber auch ebenso möglich, das aus den einzelnen Leuchtdioden 1 austretende Licht in ebenso viele Lichtleiter 23 einzukoppeln. Damit wird jede Leuchtdiode 1 als Lichtquelle der Leseleuchte 17 mit einem Lichtleiter 23 verbunden. Das Licht kann auf diese Weise über eine relativ lange Strecke zu einem Lichtaustritt 24 geleitet werden, der als ein flexibles Lichtleiterendstück 25 ausgebildet ist und dadurch für den Lichtaustritt einen Verstellbereich aufweist. Die Lichtleiter 23 können über einzelne Koppelelemente auf die Leuchtdioden 1 oder aber mit einer Gesamtkupplung auf die Leuchtdioden 1 aufsteckbar sein.

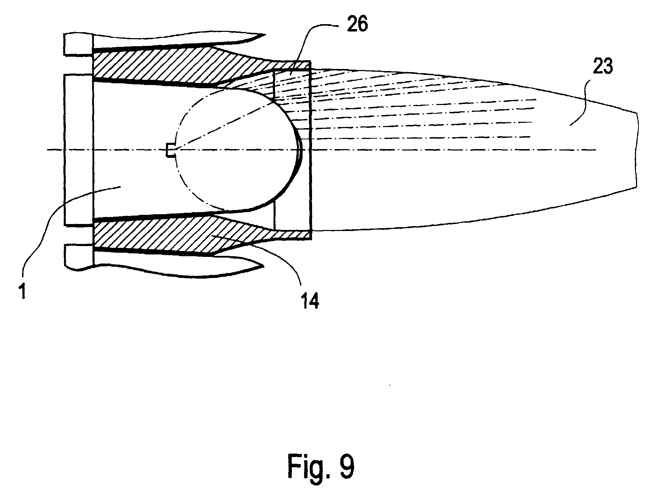

In Figur 9 ist das Aufstecken der Lichtleiter 23 auf die Leuchtdioden 1 dargestellt. Es handelt sich hier um die einzelnen Koppelelemente 26, die als aufgeweitete Endstücke der Lichtleiter 23 ausgebildet sind und sich einerseits um den kugelförmigen Kopf der Leuchtdiode 1 anlegen und andererseits in der Fassung des Hüllkörpers 14 eng anliegen. Die Halterung der Lichtleiter 23 in den Hüllkörpern 14 kann mechanisch durch klemmen, Reibung oder durch kleben erfolgen.

## Patentansprüche

1. Einrichtung zur Be- oder Ausleuchtung von Räumen, Körpern oder Flächen, insbesondere Leseleuchte für Luftfahrtgeräte, aus zumindest einer Lichtquelle, in Form einer weißen Leuchtdiode oder einer Lumineszenskonversions-Diode, die an eine Stromversorgungseinheit angeschlossen ist.
dadurch gekennzeichnet,
daß jede der mehreren eine Leuchte (17) bildenden Leuchtdioden (1) von einem Körper (14,15) radial umhüllt ist, an dessen vordere freie, stirnseitige Lichtaustrittsöffnung ein Linsenkörper (4) derart eingesetzt ist, daß die Leuchtdiode (1), der Linsenkörper (4) und der im Abstand auf einen Körper oder eine Fläche auftreffende Lichtpunkt (10) auf einer optischen Achse (16) (Strahlengang) liegen.

2. Einrichtung nach Anspruch 1,
dadurch gekennzeichnet,
daß der Linsenkörper (4) im axialen Abstand ($S_0$) vor der Leuchtdiode (1) angeordnet ist, der etwa 1/100 des Abstandes ($S_1$) zwischen dem Linsenkörper (4) und der Auftreffebene für den Lichtpunkt ist.

3. Einrichtung nach Anspruch 1 oder 2,
dadurch gekennzeichnet,
daß der Hüllkörper (14,15) röhrenförmig mit beliebiger geometrischer Querschnittsfläche ausgebildet ist, dessen Innenwände parallel zur Hüllkörperlängsachse bzw. zur optischen Achse (6) verlaufen.

4. Einrichtung nach Anspruch 1 oder 2,
dadurch gekennzeichnet,
daß der Hüllkörper (14,15) röhrenförmig mit beliebiger geometrischer Querschnittsfläche ausgebildet ist, dessen Innenwände abweichend von der Hüllkörperlangsachse konisch oder ballig verlaufen.

5. Einrichtung nach einem der vorgenannten Ansprüche,
dadurch gekennzeichnet,
daß der Hüllkörper (14,15) eine sechseckförmige Querschnittsfläche aufweist.

6. Einrichtung nach einem der Ansprüche 1 bis 4,
dadurch gekennzeichnet,
daß der Hüllkörper (14,15) eine kreisförmige, quadratische oder dreieckförmige Querschnittsfläche aufweist.

7. Einrichtung nach einem der Ansprüche 1 bis 6,
dadurch gekennzeichnet,
daß der Hüllkörper (14,15) aus einem fußseitigen Zentrierteil (14) und einem kopfseitigen Blendenteil (15) gebildet ist, der am Linsenkörper (4) ansteht.

8. Einrichtung nach einem der Ansprüche 1 bis 7,
dadurch gekennzeichnet,
daß die Leuchte (17) aus einer Vielzahl von Leuchtdioden (1) mit Hüllkörpern (14,15) gebildet ist, die im Querschnitt hexagonal und wabenförmig aneinandergelegt sind.

9. Einrichtung nach einem der Ansprüche 1 bis 8,
dadurch gekennzeichnet,
daß die Linsenkörper (4) aus einem gemeinsamen Träger herausgeformt sind.

10. Einrichtung nach einem der vorgenannten Ansprüche,
dadurch gekennzeichnet,
daß die Linsenkörper (4) hexagonal ausgebildet sind.

11. Einrichtung nach einem der vorgenannten Ansprüche,
dadurch gekennzeichnet,
daß die Hüllkörper (14) als Koppelelemente für Lichtleiter (23) ausgebildet sind.

Fig. 1

Fig. 1a

EP 1 031 464 A2

## Fig. 2

## Fig. 3

## Fig. 4

Fig. 5

Fig. 6

Fig. 7

Fig. 8

**Fig. 9**